# EUROPÄISCHE PATENTSCHRIFT

(11) **EP 3 768 982 B1**
(45) Veröffentlichungstag und Bekanntmachung des Hinweises auf die Patenterteilung: **11.05.2022**
(21) Anmeldenummer: 19725023.6
(22) Anmeldetag: 20.03.2019
(51) Int. Cl.: F16C 11/12, F16D 3/00, F16D 3/72

(54) **GELENK**
PIVOT
ARTICULATION

(30) Priorität: 23.03.2018 DE 102018107015
(43) Veröffentlichungstag der Anmeldung: 27.01.2021
(73) Patentinhaber: Physik Instrumente (PI) GmbH & Co. KG, 76228 Karlsruhe (DE)
(72) Erfinder: HÜBNER, Reinhard, 76337 Waldbronn (DE)
(74) Vertreter: K&P Patentanwaltsgesellschaft mbH
(86) Internationale Anmeldenummer: PCT/DE2019/100263
(87) Internationale Veröffentlichungsnummer: WO 2019/179579

(56) Entgegenhaltungen:
- WO-A1-2018/052939
- DE-A1-102014 002 182
- DE-B3-102017 115 050
- DE-C- 818 293
- GB-A- 2 164 716
- US-A- 3 685 314

## Beschreibung

Die Erfindung betrifft ein Gelenk gemäß den Ansprüchen 1 bis 10 , und eine Positioniereinrichtung mit einem solchen Gelenk gemäß Anspruch 11.

Aus der DE 10 2017 115 050 B3 ist ein Festkörpergelenk bekannt, welches wenigstens drei Rotationsfreiheitsgrade aufweist und das Lagerverhalten eines Kugelgelenks nachzubilden versucht, ohne jedoch dessen Nachteile hinsichtlich der unvermeidbaren Losbrechmomente aufzuweisen. Obwohl die dort offenbarte Lösung mit geeigneten Festkörpergelenken bereits nahe an die Lagereigenschaften eines Kugelgelenks heranreicht, resultieren jedoch gewisse Nachteile aufgrund unterschiedlicher Steifigkeiten in den einzelnen Rotationsfreiheitsgraden, so dass diese Lösung für bestimmte Anwendungsfälle weniger geeignet ist.

Weiterhin sind in der GB 2 164 716 A1, der DE 10 2014 002 182 A1, der WO 2018/052939 A1 und der US 3 685 314 A Gelenke beschrieben. DE 10 2014 002 182 A1 offenbart ein Gelenk nach dem Oberbegriff des Anspruchs 1.

Daher ist es Aufgabe der Erfindung, ein Gelenk mit wenigstens drei Rotationsfreiheitsgraden, d.h. mit der Funktionalität eines Kugelgelenks, bereitzustellen, bei welchem die Steifigkeiten bezüglich der Rotationsfreiheitsgrade gleich bzw. annähernd gleich sind.

Diese Aufgabe wird gelöst durch ein Gelenk gemäß Anspruch 1, wobei die sich daran anschließenden Unteransprüche mindestens zweckmäßige Weiterbildungen beschreiben.

Der im nachfolgenden Teil der Beschreibung an mehreren Stellen verwendete Begriff ,im Wesentlichen' im Zusammenhang mit der Angabe von geometrischen Daten wie Winkeln, Dimensionen, Lagen, Orientierungen oder Richtungen ist so zu verstehen, dass die entsprechenden geometrischen Daten eine Abweichung von +/- 5% gegenüber dem jeweils angegebenen geometrischen Datum haben können, wobei diese Abweichung beispielsweise auf Fertigungs- oder Montagetoleranzen zurückzuführen ist.

Das erfindungsgemäße Gelenk, welches zumindest drei Rotationsfreiheitsgrade aufweist, umfasst ein starres Trägerelement und mindestens zwei elastisch deformierbare Gelenkvorrichtungen, die an dem Trägerelement in wenigstens abschnittsweiser Überdeckung bzw. Überlappung zueinander angeordnet sind.

Jede der beiden elastisch deformierbaren Gelenkvorrichtungen umfasst zwei Gelenkelemente, wobei jedes der Gelenkelemente einen langgestreckten, vorzugsweise stabförmigen Stegabschnitt und einen an einem Ende des Stegabschnitts angeordneten Befestigungsabschnitt aufweist. Dieser Befestigungsabschnitt ist dazu vorgesehen, das Gelenk an einer übergeordneten Einheit bzw. an einem Element einer übergeordneten Einheit zu befestigen, um mit Hilfe des Gelenks die gewünschte Beweglichkeit der übergeordneten Einheit zu realisieren. Der Begriff ,langgestreckter Stegabschnitt' beschreibt dabei einen Stegabschnitt, dessen Längserstreckung wesentlich größer ist als seine Erstreckung in den zur Längserstreckung senkrechten Richtungen, d.h. seine Länge ist wesentlich größer als seine Breite und Dicke bzw. Höhe.

Die beiden Stegabschnitte einer Gelenkvorrichtung erstrecken sich derart in einer von dem Trägerelement weg weisenden Richtung, dass sie in gegenseitig überlappender Weise einander überkreuzen. Durch den entsprechenden Überkreuzungsbereich ist eine gewisse Relativbewegung der Stegabschnitte zueinander im Überkreuzungsbereich gewährleistet, so dass eine vorteilhafte Beweglichkeit der Gelenkvorrichtung bei entsprechender Beanspruchung, insbesondere hinsichtlich einer Rotationsbewegung bzw. einer Verkippung in einer zu dem Trägerelement parallelen Ebene bzw. in der Ebene des Trägerelements, resultiert.

Hierbei kann es vorteilhaft sein, dass die beiden Stegabschnitte einer Gelenkvorrichtung zumindest abschnittsweise einen Winkel zwischen sich einschließen, der zwischen 60 und 120°, und bevorzugt zwischen 70 und 95° beträgt.

Gemäß der beanspruchten Erfindung, verläuft wenigstens ein Stegabschnitt und bevorzugt verlaufen beide Stegabschnitte einer Gelenkvorrichtung zumindest abschnittsweise zwischen den beiden Stegabschnitten der anderen Gelenkvorrichtung. Mit anderen Worten tritt ein Stegabschnitt oder treten beide Stegabschnitte einer Gelenkvorrichtung durch einen durch die beiden Stegabschnitte der anderen Gelenkvorrichtung gebildeten Rahmen bzw. dessen Öffnung hindurch. Hierrüber ist eine sich kreuzende Anordnung der Gelenkvorrichtungen vergleichsweise einfach realisierbar.

Es kann ebenso von Vorteil sein, dass die Stegabschnitte einer Gelenkvorrichtung zu den Stegabschnitten der anderen Gelenkvorrichtung in einem Winkel zwischen 60° und 90° angeordnet sind. Bei einer solchen Anordnung resultiert eine besonders effektive Funktion des erfindungsgemäßen Gelenks.

Zudem kann es von Vorteil sein, dass der Bereich der Überkreuzung der Stegabschnitte einer Gelenkvorrichtung einen anderen Abstand zu dem Trägerelement aufweist als der Bereich der Überkreuzung der Stegabschnitte der anderen Gelenkvorrichtung. Konkret kann es vorteilhaft sein, dass der Bereich der Überkreuzung der Stegabschnitte einer Gelenkvorrichtung näher zu dem Trägerelement angeordnet ist als der Überkreuzungsbereich der Stegabschnitte der anderen Gelenkvorrichtung.

Ferner kann es von Vorteil sein, dass ein Gelenkelement zwei Befestigungsabschnitte aufweist, die an gegenüberliegenden Enden des Stegabschnitts angeordnet sind. Über einen der Befestigungsabschnitte ist somit eine Befestigung des Gelenkelements an dem Trägerelement realisierbar, während der andere Befestigungsabschnitt des gleichen Gelenkelements zur Befestigung an einer übergeordneten Einheit bzw. einem Element einer übergeordneten Einheit dient.

Außerdem kann es von Vorteil sein, dass die Gelenkelemente einstückig ausgeführt sind, also dass der Befestigungsabschnitt oder die Befestigungsabschnitte einstückig bzw. integral mit dem Stegabschnitt ausgeführt ist bzw. sind. Hierdurch gelingt eine Reduzierung der Teile des Gelenkelements bzw. des gesamten Gelenks, so dass die Montage des Gelenks vereinfacht und schneller bzw. kostengünstiger realisierbar ist.

Darüber hinaus kann es von Vorteil sein, dass alle Gelenkelemente im Wesentlichen die gleiche Geometrie aufweisen. Dies vereinfacht den Herstellung- und Fertigungsprozess.

Es kann auch von Vorteil sein, dass die beiden Gelenkelemente einer Gelenkvorrichtung spiegelbildlich zueinander angeordnet sind. Dadurch resultiert insbesondere eine symmetrische Anordnung der Stegabschnitte einer Gelenkvorrichtung, die zu gleichermaßen symmetrischem Deformationsverhalten der Gelenkvorrichtung, insbesondere zu einer weitgehend identischen Flexibilität um alle Drehfreiheitsgrade, führt.

Des Weiteren kann es von Vorteil sein, dass an dem Trägerelement wenigstens ein elastisch deformierbares Stützelement angeordnet ist. Hierbei ist es insbesondere von Vorteil, wenn sich das Stützelement zumindest abschnittsweise zwischen wenigstens einer der beiden Gelenkvorrichtungen in einer dem Trägerelement abgewandten Richtung erstreckt. Mit Hilfe des Stützelements können die Stegabschnitte der Gelenkelemente auf einfache Weise mit einer Zugkraft beaufschlagt werden, so dass eine Vorspannung der Gelenkelemente in der Erstreckungsrichtung des Gelenks resultiert.

Weiterhin kann es von Vorteil sein, dass das Gelenk vier an dem Trägerelement angeordnete Gelenkvorrichtungen und zwei an dem Trägerelement angeordnete Stützelemente aufweist, wobei die Gelenkvorrichtungen paarweise und die Stützelemente einzeln an den gegenüberliegenden Enden des Trägerelements befindlich sind. Durch den entsprechenden symmetrischen Aufbau des Gelenks ist eine weitgehend identische Flexibilität um alle Drehfreiheitsgrade beidseits des Trägerelements realisiert.

Die Erfindung betrifft zudem eine Positioniereinrichtung, insbesondere eine parallelkinematische Positioniervorrichtung, mit wenigstens einem des zuvor beschriebenen Gelenks.

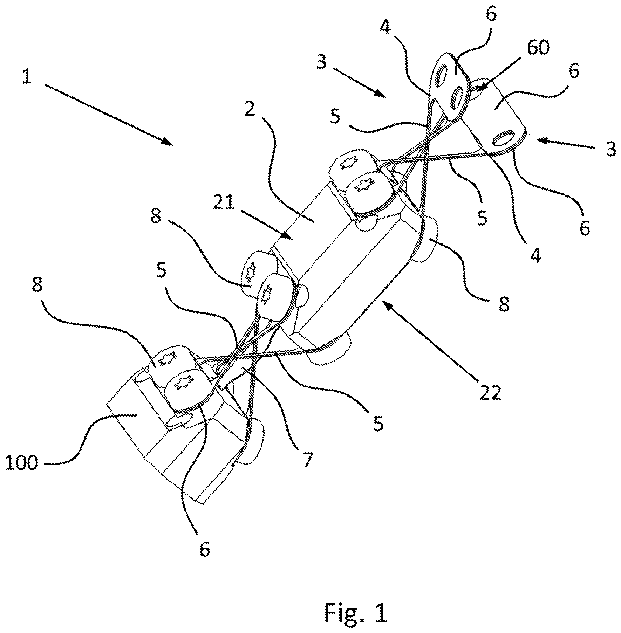

Im Folgenden wird ein Ausführungsbeispiel der Erfindung anhand der einzigen Figur 1 beschrieben. Diese zeigt eine Ausführungsform eines erfindungsgemäßen Gelenks 1, bei welchem insgesamt vier an einem aus Aluminium bestehenden und im Wesentlichen starren Trägerelement 2 angeordnete und elastisch deformierbare bzw. flexible Gelenkvorrichtungen 3 aus Federstahl vorhanden sind. Andere, eine entsprechende elastische Deformierbarkeit bzw. Flexibilität aufweisende Materialien zur Verwendung für die Gelenkvorrichtungen 3 sind ebenso denkbar, beispielsweise Bronze, welches nichtmagnetisch ist und dann zum Einsatz kommen kann, wenn das erfindungsgemäße Gelenk in einem Magnetfeld verwendet wird. Sind nur sehr geringe Auslenkungen des Gelenks beabsichtigt, können die Gelenkvorrichtungen auch aus einem keramischen Material gefertigt sein.

Das Trägerelement 2, welches neben Aluminium beispielsweise auch aus einem anderen Metall, etwa Stahl, oder auch aus Keramik gefertigt sein kann, hat eine im Wesentlichen rechteckige Form, wobei der mittlere Bereich eine größere Dicke aufweist, und sich das Trägerelement zu seinen beiden Enden hin bezüglich seiner Dicke verjüngt.

Jede Gelenkvorrichtung 3 umfasst zwei identisch geformte Gelenkelemente 4, wobei jedes Gelenkelement 4 einen langgestreckten, im Wesentlichen stabförmigen Stegabschnitt 5 und zwei einstückig mit diesem ausgebildete Befestigungsabschnitte 6, die an den beiden gegenüberliegenden Enden des Stegabschnitts 5 angeordnet sind, aufweist. Eine einstückige Ausführung der Befestigungsabschnitte 6 mit dem langgestreckten Stegabschnitt 5 bzw. eine einstückige Ausführung der Gelenkelemente 4 ist jedoch nicht zwingend, so dass die Befestigungsabschnitte 6 auch auf andere Weise mit dem Stegabschnitt 5 verbunden bzw. an diesem angeordnet sein können.

Die Befestigungsabschnitte 6 eines Gelenkelements 4 besitzen die gleiche Form, wobei in Figur 1 nur die von dem Trägerelement 2 beabstandeten Befestigungsabschnitte 6 gut zu erkennen sind. Jeder der beiden Befestigungsabschnitte 6 eines Gelenkelements 4 erstreckt sich am jeweiligen Ende des Stegabschnitts 5 im Wesentlichen fahnenförmig zu diesem, jedoch sind die Erstreckungsrichtungen der Befestigungsabschnitte 6 an den gegenüberliegenden Enden des Stegabschnitts 5 entgegengesetzt. Daher weist jedes Gelenkelement 4 im Wesentlichen eine Z-Form auf. Jeder Befestigungsabschnitt 6 umfasst zudem zwei Durchgangsbohrungen bzw. Ausnehmungen 60.

Die beiden Gelenkelemente 4 einer Gelenkvorrichtung 3 haben die gleiche Form, sind jedoch spiegelbildlich zueinander angeordnet, wobei die jeweils zugeordneten Befestigungsabschnitte 6 so in Überdeckung zu liegen kommen, dass die beiden Durchgangsbohrungen 60 eines Befestigungsabschnitts 6 exakt über den Durchgansbohrungen 60 des angrenzenden und zugeordneten Befestigungsabschnitts 6 angeordnet sind. Dadurch ist es möglich, dass ein Befestigungselement 8 in Form einer Schraube durch die durch die übereinanderliegenden Durchgangsbohrungen gebildeten Löcher hindurchtritt und eine Verbindung des Befestigungsabschnitts 6 mit dem Trägerelement 2 auf der einen Seite und einem Element 100 einer übergeordneten Einheit, an welcher bzw. in welcher das erfindungsgemäße Gelenk eingebaut bzw. eingesetzt ist, auf der anderen Seite realisiert werden kann.

Aufgrund der sich überdeckenden Anordnung der Durchgangsbohrungen 60 zweier angrenzender und zugeordneter Befestigungsabschnitte 6 kann über das Befestigungselement 8 neben der Verbindung mit dem Trägerelement 2 bzw. dem Element 100 einer übergeordneten Einheit eine Verbindung der beiden Gelenkelemente 4 einer Gelenkvorrichtung 3 hergestellt werden. Jedoch ist eine solche Verbindung der beiden Gelenkelemente 4 einer Gelenkvorrichtung 3 nicht zwingend erforderlich, so dass die Befestigungsabschnitte 6 auch so ausgestaltet sein können, dass über sie nur die notwendige Fixierung des jeweils zwischen ihnen liegenden Stegabschnitts 5 realisiert ist.

Es ist denkbar, die Verbindung zwischen den Stegabschnitten 5 einer Gelenkvorrichtung 3 und dem Trägerelement 2 nicht über Schrauben zu realisieren, sondern über andere Verbindungsarten wie Löten, Schweißen, Nieten oder Kleben. Denkbar ist zudem eine einstückige bzw. integrale Ausführung der Stegabschnitte 5 mit dem Trägerelement 2 unter gleichzeitigem Wegfall des entsprechenden Befestigungsabschnitts 6. Analog ist denkbar, die Verbindung zwischen den Stegabschnitten 5 einer Gelenkvorrichtung 3 und einer übergeordneten Einheit nicht mittels Schrauben zu realisieren, sondern ebenfalls über die zuvor aufgeführten Verbindungsarten wie Löten, Schweißen, Nieten oder Kleben. Selbst eine einstückige Ausführungsform der Stegabschnitte 5 mit der übergeordneten Struktur oder Einheit ist denkbar.

Gemäß Figur 1 sind sowohl an der Oberseite 21 des Trägerelements 2, als auch an der Unterseite 22 des Trägerelements jeweils zwei Gelenkelemente 4 über deren entsprechenden Befestigungsabschnitt 6 und unter Verwendung einer Schraube 8 befestigt. Bei den an der Oberseite 21 des Trägerelements 2 befestigten Gelenkelementen 4 der entsprechenden Gelenkvorrichtung 3 sind die Stegabschnitte 5 so angeordnet, dass sie sich in einer von dem Trägerelement 2 weg weisenden Richtung erstrecken und im weiteren Verlauf einander überkreuzen. Das heißt, die Stegabschnitte 5 erstrecken sich von dem Trägerelement 2 in einer Richtung, die von der Erstreckungsrichtung des Trägerelements abweicht bzw. gegenüber dieser angewinkelt ist, wobei der Winkel dieser Richtung zu der entsprechenden Seitenfläche des Trägerelements 2 kleiner als 90° ist. Zudem erstrecken sich die Stegabschnitte 5 der beiden an der Oberseite 21 des Trägerelements 2 angeordneten Gelenkelemente 4 derart in einer von dem Trägerelement 2 weg weisenden Richtung, dass sie zu der Ebene, welche durch die Oberseite 21 des Trägerelements 2 aufgespannt ist, angewinkelt angeordnet sind. Die beiden Stegabschnitte 5 liegen dabei im Wesentlichen in der gleichen Ebene bzw. treten nur im Bereich ihrer Überkreuzung aus der gemeinsamen Ebene heraus.

Auch bei den an der Unterseite 22 des Trägerelements 2 befestigten Gelenkelementen 4 der entsprechenden Gelenkvorrichtung 3 sind die Stegabschnitte 5 so angeordnet, dass sie sich in einer von dem Trägerelement 2 weg weisenden Richtung erstrecken und im weiteren Verlauf einander überkreuzen. Allerdings ist der Bereich der Überkreuzung der beiden Stegabschnitte 4 der an der Unterseite 22 des Trägerelements 2 befestigten Gelenkelemente 4 weiter von dem Trägerelement entfernt bzw. zu diesem beabstandet als der Bereich der Überkreuzung der beiden Stegabschnitte 4 der an der Oberseite 21 des Trägerelements 2 befestigten Gelenkelemente 4. Dadurch, dass die Überkreuzungsbereiche unterschiedlichen Abstand zu dem Trägerelement 2 aufweisen, können die beiden Stegabschnitte der an der Oberseite 21 des Trägerelements 2 befestigten Gelenkelemente 4 abschnittsweise zwischen den beiden Stegabschnitten 5 der an der Unterseite 22 des Trägerelements 2 befestigten Gelenkelemente verlaufen bzw. durch diese hindurchtreten. Mit anderen Worten bilden die beiden Stegabschnitte 5 der an der Unterseite 22 des Trägerelements 2 angeordneten Gelenkvorrichtung 3 aufgrund des weiter zu dem Trägerelement 2 entfernten Überkreuzungsbereichs einen im Wesentlichen dreiecksförmigen Rahmen, durch welchen die beiden Stegabschnitte 5 der an der Oberseite 21 des Trägerelements 2 angeordneten Gelenkvorrichtung 3 hindurchtreten können. Das bedeutet, dass die Gelenkelemente 4 einer Gelenkvorrichtung 3 bzw. deren Stegabschnitte 5 ebenfalls eine zueinander überkreuzende Anordnung aufweisen, d.h. neben der einander überkreuzenden Anordnung der beiden Stegabschnitte 4 einer Gelenkvorrichtung 3.

Analog zu den Stegabschnitten 5 der an der Oberseite 21 des Trägerelements 2 angeordneten Gelenkvorrichtung 3 erstrecken sich die Stegabschnitte 5 der beiden an der Unterseite 22 des Trägerelements 2 angeordneten Gelenkelemente 5 derart in einer von dem Trägerelement 2 weg weisenden Richtung, dass sie zu der Ebene, welche durch die Unterseite 22 des Trägerelements 2 aufgespannt ist, angewinkelt angeordnet sind. Die beiden Stegabschnitte 5 liegen dabei im Wesentlichen in der gleichen Ebene bzw. treten nur im Bereich ihrer Überkreuzung aus der gemeinsamen Ebene heraus.

Die Ebene, in welcher die beiden Stegabschnitte 5 der an der Oberseite 21 des Trägerelements 2 angeordneten Gelenkvorrichtung 3 liegen, ist nicht parallel zu der Ebene, in welcher die beiden Stegabschnitte 5 der an der Unterseite 22 des Trägerelements 2 angeordneten Gelenkvorrichtung 3 liegen. Die beiden zuvor beschriebenen Ebenen schließen einen Winkel von etwa 70° ein.

An einem der beiden nach außen weisenden Enden bzw. Endabschnitten des Trägerelements 2 ist ein elastisch deformierbares, langgestrecktes und flaches Stützelement 7 angeordnet, das in Figur 1 aus Übersichtlichkeitsgründen auf der gegenüberliegenden Seite des Trägerelements 2 weggelassen wurde. Das Stützelement 7 ist mit einem seiner Endabschnitte in einer entsprechenden Ausnehmung des Trägerelements 2 eingesetzt und dort über eine Klemmverbindung befestigt. Andere Arten der Befestigung, wie beispielsweise eine Verschraubung, eine Verklebung, eine Verlötung, eine Verschweißung oder ähnliches sind ebenso denkbar.

Das Stützelement 7 erstreckt sich mit seiner langgestreckten Form in einer dem Trägerelement 2 abgewandten Richtung und weist an seinem gegenüberliegenden Ende einen in Figur 1 nicht zu erkennenden sich verbreiternden Endabschnitt auf, wobei der Endabschnitt an dem Element 100 einer übergeordneten Einheit angreift bzw. in eine entsprechende Ausnehmung in dem Element 100 eingreift, vorzugweise über eine Klemmverbindung. Durch die Verbindung des Stützelements 7 mit dem Element 100 einer übergeordneten Einheit wird das Stützelement 7 mit einer Druckkraft beaufschlagt, und diese Druckkraft bewirkt eine Zugkraftbelastung der Gelenkelemente 4 und insbesondere eine entsprechende Vorspannung ihrer Stegabschnitte 5 in einer Richtung, die im Wesentlichen mit der Erstreckungsrichtung des Trägerelements bzw. des Gelenks übereinstimmt.

### Bezugszeichenliste

- 1: Gelenk
- 2: Trägerelement
- 21: Oberseite (des Trägerelements 2)
- 22: Unterseite (des Trägerelements 2)
- 3: Gelenkvorrichtung
- 4: Gelenkelement
- 5: Stegabschnitt
- 6: Befestigungsabschnitt
- 7: Stützelement
- 8: Befestigungselement
- 60: Durchgangsbohrung
- 100: Element (einer übergeordneten Einheit)

## Patentansprüche

1. Gelenk (1), welches zumindest drei Rotationsfreiheitsgrade aufweist, mit einem starren Trägerelement (2) und mit mindestens zwei elastisch deformierbaren Gelenkvorrichtungen (3), die an dem Trägerelement (2) in wenigstens abschnittsweiser Überdeckung zueinander angeordnet sind, wobei jede der Gelenkvorrichtungen (3) zwei Gelenkelemente (4) umfasst, und jedes der Gelenkelemente (4) zwei langgestreckte Stegabschnitte (5) und einen an einem Ende des Stegabschnitts (4) angeordneten Befestigungsabschnitt (6) zur Befestigung der Gelenkvorrichtung (3) an einer übergeordneten Einheit aufweist, und sich die beiden Stegabschnitte (5) jeder Gelenkvorrichtung (3) in einer von dem Trägerelement (2) weg weisenden Richtung derart erstrecken, dass sie einander überkreuzen, **dadurch gekennzeichnet dass** wenigstens ein Stegabschnitt (5) einer Gelenkvorrichtung (3) zumindest abschnittsweise zwischen den beiden Stegabschnitten (5) der anderen Gelenkvorrichtung (3) verläuft.

2. Gelenk nach Anspruch 1, **dadurch gekennzeichnet, dass** die Stegabschnitte (5) einer Gelenkvorrichtung (3) zu den Stegabschnitten (5) der anderen Gelenkvorrichtung (3) in einem Winkel zwischen 60° und 90° angeordnet ist.

3. Gelenk nach einem der vorhergehenden Ansprüche, **dadurch gekennzeichnet, dass** der Bereich der Überkreuzung der Stegabschnitte (5) einer Gelenkvorrichtung (3) einen anderen Abstand zu dem Trägerelement (2) aufweist als der Bereich der Überkreuzung der Stegabschnitte (5) der anderen Gelenkvorrichtung (3).

4. Gelenk nach einem der vorhergehenden Ansprüche, **dadurch gekennzeichnet, dass** ein Gelenkelement (4) zwei Befestigungsabschnitte (6) aufweist, die an gegenüberliegenden Enden des Stegabschnitts (5) angeordnet sind.

5. Gelenk nach einem der vorhergehenden Ansprüche, **dadurch gekennzeichnet, dass** die Gelenkelemente einstückig ausgeführt sind.

6. Gelenk nach einem der vorhergehenden Ansprüche, **dadurch gekennzeichnet, dass** alle Gelenkelemente (4) im Wesentlichen die gleiche Geometrie aufweisen.

7. Gelenk nach Anspruch 6, **dadurch gekennzeichnet, dass** die beiden Gelenkelemente (4) einer Gelenkvorrichtung (3) spiegelbildlich zueinander angeordnet sind.

8. Gelenk nach einem der vorhergehenden Ansprüchen, **dadurch gekennzeichnet, dass** an dem Trägerelement (2) wenigstens ein elastisch deformierbares Stützelement (7) angeordnet ist.

9. Gelenk nach Anspruch 8, **dadurch gekennzeichnet, dass** sich das Stützelement (7) zumindest abschnittsweise zwischen wenigstens einer der beiden Gelenkvorrichtungen (3) in einer dem Trägerelement (2) abgewandten Richtung erstreckt.

10. Gelenk nach einem der vorhergehenden Ansprüche, **dadurch gekennzeichnet, dass** dieses vier an dem Trägerelement (2) angeordnete Gelenkvorrichtungen (3) und zwei an dem Trägerelement (2) angeordnete Stützelemente (7) aufweist, wobei die Gelenkvorrichtungen (3) paarweise und die Stützelemente (7) einzeln an den gegenüberliegenden Enden des Trägerelements (2) befindlich sind.

11. Positioniereinrichtung, insbesondere parallelkinematische Positioniervorrichtung, mit einem Gelenk nach einem der vorhergehenden Ansprüche.

## Claims

1. Joint (1), which comprises at least three degrees of freedom of rotation and which comprises a rigid carrier element (2) and at least two elastically deformable joint devices (3), which are arranged at the carrier element (2) in an overlap with respect to one another at least in a section, wherein each of the joint devices (3) comprises two joint elements (4), and wherein each of the joint elements (4) comprises an elongated web section (5) and a fastening section (6) which is arranged at one end of the web section (5) for fastening the joint device (3) at a higher-level unit, and wherein the two web sections (5) of each joint device (3) extend in a direction which points away from the carrier element (2) in such a way that the same cross one another, **characterized in that** at least one web section (5) of a joint device (3) extends at least in a section between the two web sections (5) of the other joint device (3).

2. Joint according to claim 1, **characterized in that** the web sections (5) of one joint device (3) are arranged at an angle to the web sections (5) of the other joint device (3), wherein the angle amounts to between 60 degrees and 90 degrees.

3. Joint according to one of the preceding claims, **characterized in that** the area of the crossing of the web sections (5) of a joint device (3) comprises a different distance from the carrier element (2) than the area of the crossing of the web sections (5) of the other joint device (3).

4. Joint according to one of the preceding claims, **characterized in that** a joint element (4) comprises two fastening sections (6) which are disposed at opposite ends of the web section (5).

5. Joint according to one of the preceding claims, **characterized in that** the joint elements are made in one piece.

6. Joint according to one of the preceding claims, **characterized in that** all joint elements (4) comprise essentially the same geometry.

7. Joint according to claim 6, **characterized in that** the two joint elements (4) of a joint device (3) are arranged in mirror image to one another.

8. Joint according to one of the preceding claims, **characterized in that** at least one elastically deformable support element (7) is arranged at the support element (2).

9. Joint according to claim 8, **characterized in that** the support element (7) extends at least in a section between at least one of the two joint devices (3) in a direction which points away from the carrier element (2).

10. Joint according to one of the preceding claims, **characterized in that** the same comprises four joint devices (3) arranged on the carrier element (2) and two support elements (7) arranged at the carrier element (2), wherein the joint devices (3) are in pairs and the support elements (7) are individually located at the opposite ends of the carrier element (2).

11. Positioning device, in particular parallel kinematic positioning device, which comprises a joint according to one of the preceding claims.

## Revendications

1. Articulation (1), qui comprend au moins trois degrés de liberté de rotation, comportant au moins un élément porteur rigide (2) et au moins deux dispositifs d'articulation déformables élastiquement (3), qui sont disposés au niveau de l'élément porteur (2) en recouvrement mutuel au moins par sections, chacun des dispositifs d'articulation (3) comprenant deux éléments d'articulation (4), et chacun des éléments d'articulation (4) comprenant deux sections d'âme étirées en longueur (5) et une section de fixation (6) disposée à l'extrémité de la section d'âme (5) pour la fixation du dispositif d'articulation (3) à une unité d'ordre supérieur, et les deux sections d'âme (5) de chaque dispositif d'articulation (3) s'étendant dans un sens détourné de l'élément porteur (2) de manière à se croiser, **caractérisée en ce qu'**au une section d'âme (5) d'un dispositif d'articulation (3) s'étende au moins par sections entre les deux sections d'âme (5) de l'autre dispositif d'articulation (3).

2. Articulation selon la revendication 1, **caractérisée en ce que** les sections d'âme (5) d'un dispositif d'articulation (3) sont disposées en angle par rapport aux sections d'âme (5) de l'autre dispositif d'articulation (3), suivant un angle compris entre 60 degrés et 90 degrés.

3. Articulation selon l'une quelconque des revendications précédentes, **caractérisée en ce que** la zone de croisement des sections d'âme (5) d'un dispositif d'articulation (3) comporte une distance par rapport à l'élément porteur (2) autre que celle de la zone de croisement des sections d'âme (5) de l'autre dispositif d'articulation (3).

4. Articulation selon l'une quelconque des revendications précédentes, **caractérisée en ce qu'**un élément d'articulation (4) comprend deux sections de fixation (6) qui sont disposées à des extrémités opposées de la section d'âme (5).

5. Articulation selon l'une quelconque des revendications précédentes, **caractérisée en ce que** les éléments d'articulation sont réalisés en une pièce.

6. Articulation selon l'une quelconque des revendications précédentes, **caractérisée en ce que** tous les éléments d'articulation (4) présentent sensiblement la même géométrie.

7. Articulation selon la revendication 6, **caractérisée en ce que** les deux éléments d'articulation (4) d'un dispositif d'articulation (3) sont disposés en symétrie miroir l'un par rapport à l'autre.

8. Articulation selon l'une quelconque des revendications précédentes, **caractérisée en ce qu'**au moins un élément support déformable élastiquement (7) est disposé au niveau de l'élément porteur (2).

9. Articulation selon la revendication 8, **caractérisée en ce que** l'élément support (7) s'étend au moins par sections entre au moins un des deux dispositifs d'articulation (3) dans un sens détourné de l'élément porteur (2).

10. Articulation selon l'une quelconque des revendications précédentes, **caractérisée en ce que** celle-ci présente quatre dispositifs d'articulation (3) disposés sur l'élément porteur (2) et deux éléments supports (7) disposés sur l'élément porteur (2), les dispositifs d'articulation (3) étant placés par paires et les éléments supports (7) étant placés individuellement aux extrémités opposées de l'élément porteur (2).

11. Dispositif de positionnement, en particulier dispositif de positionnement à cinématique parallèle, comportant une articulation selon l'une quelconque des revendications précédentes.
